# EUROPEAN PATENT APPLICATION

(11) **EP 3 842 976 A1**
(43) Date of publication of application: **30.06.2021**
(21) Application number: 19306767.5
(22) Date of filing: 24.12.2019
(51) Int. Cl.: G06F 21/60, G06F 21/64, G06F 21/72, G06F 21/81

(54) **METHOD AND A CORRESPONDING SYSTEM FOR SECURELY ACCESSING AT LEAST ONE FEATURE OF A CHIP**

(71) Applicant: THALES DIS FRANCE SA, 92190 Meudon (FR)
(72) Inventor: AHMED, Naveed, 13881 GEMENOS CEDEX (FR); KORI, Sandeep Kumar, 13881 GEMENOS CEDEX (FR); COULON, Jean-Roch, 13881 GEMENOS CEDEX (FR)
(74) Representative: Scheer, Luc

(57) **Abstract**

A method 40 for securely accessing at least one chip 14 feature comprises:
- a) applying, by a device 12, a first predetermined cryptographic operation(s) 46 or 48, to a data sequence;
- b) sending 410, to the chip, the cryptogram;
- c) verifying 414, among data received by or within the chip, whether a predetermined trigger signal is present, the trigger signal allowing to notify the chip to launch an application of a second predetermined cryptographic operation(s) to the received cryptogram;
- d) applying, only if the trigger signal is present, the second cryptographic operation(s) 416 or 418, to the received cryptogram;
- e) obtaining the received data sequence;
- f) verifying 422 whether the data sequence includes a predetermined pattern; and
- g) authorizing 424 access to the at least one chip feature, only if the data sequence includes the pattern.

## Description

### Field of the invention:

The invention relates generally to a method for securely accessing at least one feature of a chip.

The chip may be included in a Secure Element (or SE).

Within the present description, an SE is a smart object that includes a chip(s) that protect(s), as a tamper resistant component(s), access to stored data and that is intended to communicate data with an external device(s), like e.g., an SE host device, such as a mobile (tele)phone or a Personal Computer (or PC).

The SE chip, as a chip incorporated in an SE host device, includes notably an embedded SE (or eSE), an embedded Universal Integrated Circuit Card (or eUICC), an embedded Subscriber Identity Module (or eSIM) and a Trusted Execution Environment (or TEE), as a secure area of a (SE host device) processor and a secured runtime environment, within the SE host device.

The SE host device may include a mobile (tele)phone, a Personal Computer (or PC), a user terminal, a terminal, a Hardware Security Module (or HSM) type device and a server.

Furthermore, the invention also pertains to a corresponding system for securely accessing at least one feature of a chip.

### State of the art:

WO 2019120991 A1 describes a technique, based on an operating voltage modulation scheme, to communicate, to a chip, a predefined pattern that allows, when detected by the chip, activating a chip feature.

However, such a known technique does not provide neither the confidentiality nor the integrity of the pattern. Thus, an attacker who accesses the chip can spy the communication and retrieve the used pattern. The attacker may therefore replay the same pattern onto numerous other chips.

There is a need of a solution that allows securely notably activating a chip feature.

### Summary of the invention:

The invention proposes a solution for satisfying the just herein above specified need by providing a method for securely accessing at least one feature of a chip.

According to the invention, the method comprises:
- a) applying, by a device, at least one first predetermined cryptographic operation, to a data sequence, the device thus obtaining a cryptogram;
- b) sending, by the device to the chip, the cryptogram;
- c) verifying, by the chip, among data received by or within the chip, whether a predetermined trigger signal is or is not present, the trigger signal allowing to notify the chip to launch an application of at least one second predetermined cryptographic operation to the received cryptogram;
- d) applying, by the chip, only if the trigger signal is present, the at least one second cryptographic operation, to the received cryptogram;
- e) obtaining, by the chip, the received data sequence;
- f) verifying, by the chip, whether the received data sequence does or does not include a predetermined pattern; and
- g) authorizing, by the chip, access to the at least one feature of the chip, only if the received data sequence includes the pattern.

The principle of the invention consists in performing, by a device, one or several first predefined cryptographic operations, onto a data sequence, and transmitting, to a chip, the resulting secure data sequence or cryptogram. The chip detects, in data received from or in the chip, a presence of a predefined trigger signal. The trigger signal allows the chip to know that the chip has received the cryptogram. Once the trigger signal is present, the chip triggers an execution of one or several second predefined cryptographic operations onto the received cryptogram. The chip therefore executes one or several second cryptographic operations onto the received cryptogram and gets the received data sequence. The chip checks whether the received data sequence does or does not include a predefined pattern. And, only in the affirmative, the chip authorizes the device to access a chip feature(s). In other words, the device thus establishes a secure communication link to a chip feature(s).

The device firstly processes a data sequence by carrying out the first cryptographic operation(s), such as a data encryption and/or a data signature, onto the data sequence.

The device transmits, to the chip, the resulting secure data sequence or cryptogram, as encrypted data and/or signed data. The chip receives, indirectly caused by or directly from the device, a predefined trigger signal.

This is only when detecting the trigger signal presence that the chip knows that the chip has effectively received the cryptogram transmitted from the device.

Following such a trigger signal presence detection, the chip can determine, based on the received cryptogram, a corresponding original data sequence by launching an execution of a data signature verification and/or a data decryption, as the second cryptographic operation(s).

Once the chip has determined the data sequence in plain text (i.e. in an unencrypted manner), the chip identifies, within the data sequence, a predefined pattern.

Then, the chip authorizes the device to access, i.e. read from and/or write into, one or several chip features. The chip feature(s) may include one or several HardWare (or HW) features, like e.g., a particular chip memory(ies), and/or one or several SoftWare (or SW) features, such as an Operating System (or OS).

The invention solution is more secure than the aforementioned solution since a data sequence to be transmitted by the device has undergone one or several first cryptographic operations that allow securing a further data sequence processing.

The invention solution is secure at the chip side, since an attacker has further to know that a trigger signal is to be firstly identified prior to carrying out one or several second cryptographic operations to retrieve the corresponding received data sequence.

The invention solution thus provides security to access one or several chip features.

The invention solution may provide several protection levels, such as e.g., an authorization of the pattern, a confidentiality of the pattern, an authentication of the device that has sent the pattern, an anti-cloning solution and/or an anti-replay solution.

Once the chip has authorized access to one or several chip features, the invention solution may allow notably:
1. activating another communication link(s) than the communication link that is used to communicate a cryptogram relating to the pattern from the device to the chip;
2. a data reading, such as a reading of a value at a particular memory address;
3. a data writing, like e.g., a writing of a value at a particular memory address;
4. a modification of one or several chip features;
5. a chip analysis/diagnosis by disabling and/or enabling one or several chip features;
6. a data (re)setting, like e.g., a persistent variable memory to a default value;
7. a resetting of HW feature settings and/or a recovery of a chip that is faulty or considered as being dead and that comes back to a completely operational mode by changing e.g., a HW and/or SW setting(s) through a set or a sequence of codes, as data executable by chip data processing means.

According to a further aspect, the invention is a system for securely accessing at least one feature of a chip. The system includes a device and the chip that is connected to the device.

According to the invention, the device is configured to:
- apply, at least one first predetermined cryptographic operation, to a data sequence, the device thus obtaining a cryptogram; and
- send, to the chip, the cryptogram;
and the chip is configured to:
- verify, among data received by or within the chip, whether a predetermined trigger signal is or is not present, the trigger signal allowing to notify the chip to launch an application of at least one second predetermined cryptographic operation to the received cryptogram;
- apply, only if the trigger signal is present, the at least one second cryptographic operation, to the received cryptogram;
- obtain the received data sequence;
- verify, whether the received data sequence does or does not include a predetermined pattern; and
- authorize access to the at least one feature of the chip, only if the received data sequence includes the pattern.

The device includes, among other computing devices, a terminal, a mobile phone, a PC, an HSM type device, a (local or remote) server, a laptop and a user terminal.

### Brief description of the drawings:

Additional features and advantages of the invention will be apparent from a detailed description of one preferred embodiment of the invention, given as an indicative and non-limitative example, in conjunction with the following drawings:
- Figure 1 is an embodiment of a Terminal Equipment (or TE) comprising a (mobile) phone and an eUICC, the TE being used to implement a method for securely accessing one or several eUICC features, according to the invention;
- Figure 2 illustrates an embodiment of an architecture of the eUICC of figure 1;
- Figure 3 presents an embodiment of a secure data sequence, as a cryptogram, that the phone sends to the chip 14 of figure 1 by using an operating voltage modulation scheme, according to the invention; and
- Figure 4 is an embodiment of a message flow between the phone and the eUICC of figure 1, in which the phone performs a first cryptographic operation(s) to a data sequence and sends, to the eUICC, the cryptogram and, then, once a predefined trigger signal is detected by the eUICC, the eUICC performs a second cryptographic operation(s) onto the received cryptogram, the eUICC identifies, based on the resulting data sequence, a predefined pattern and authorizes access to an eUICC feature(s).

### Detailed description:

Herein under is considered a case in which the invention method for securely accessing at least one feature of an eUICC is implemented by, locally at the eUICC side, a phone and the eUICC. According to such an embodiment, the phone, as a device, cooperates with the eUICC, as the chip, so as to improve the security to access, from the device, a chip feature(s).

According to another embodiment (not represented), the invention method for securely accessing at least one feature of a chip is implemented by a remote server, through a chip host entity (like e.g., a phone), and the chip. According to such an alternative embodiment, the server, as a device, carries out the functions that are described infra and that are carried out by the phone.

The invention does not impose any constraint as to a kind of the SE type that includes the chip.

Naturally, the herein below described embodiment is only for exemplifying purposes and is not considered to reduce the scope of the invention.

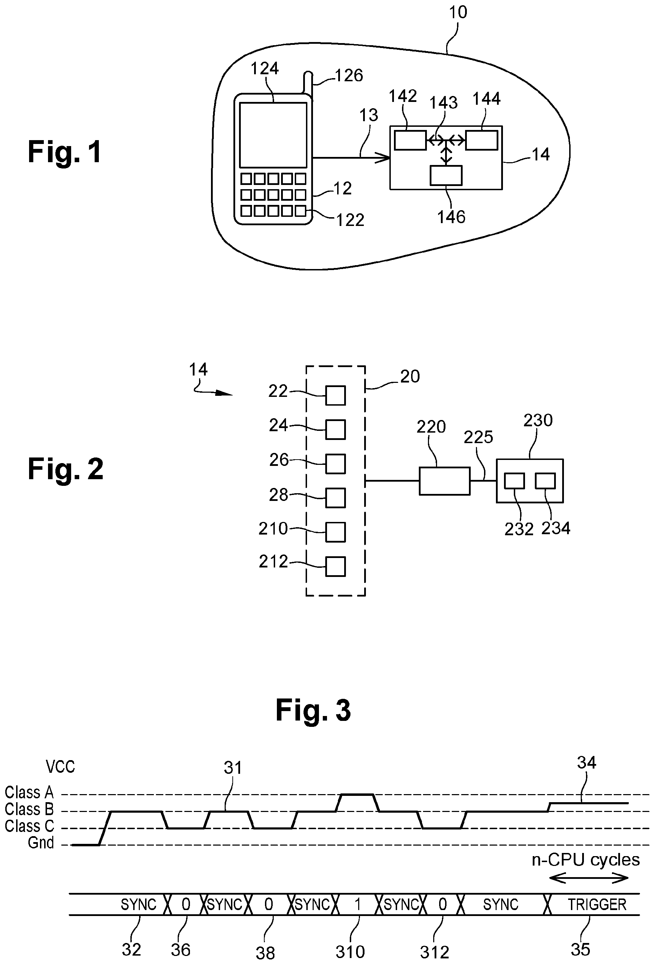

**Figure 1** shows schematically a TE 10, as a system, that includes a phone 12 and an eUICC 14.

The phone 12 and the eUICC 14 may both belong to a subscriber to a wireless service(s).

The phone 12 and the eUICC 14 are adapted to implement, according to the invention, a method for securely accessing one or several features of the eUICC 14.

The phone 12, as a device, hosts the eUICC 14, as a chip.

Instead of a phone, the device may include a server, an HSM type device, a user terminal, a terminal, a PC, a desktop computer, a tablet, a laptop (computer), a media-player, a game console, a netbook, a smart watch, a smart jewel (or jewelry), a headset, a handset, a Personal Digital Assistance (or PDA), a machine in a Machine-to-Machine (or M2M), an Internet of Thing (or loT), any stationary or mobile (electronic) device and/or another chip. The device may include any other computing device that includes means for processing data, means for exchanging data with outside and that includes and/or is connected to means for storing data.

The phone 12 includes one or several (micro)processors (and/or a (micro)controller(s)), as data processing means (not represented), one or several memories, as data storing means, and several Input/Output (or I/O) interfaces that are internally all connected, through an internal bidirectional data bus.

The phone I/O interfaces include or are connected to a ContacT (or CT) interface(s), to exchange, over a CT link(s) 13, with the eUICC 14, as an internal interlocutor entity. The CT link(s) 13 is(are) at least mono-directional, i.e. from the device to the chip, and is preferably bi-directional.

The phone I/O interfaces includes at least one output interface. The output interface corresponds to an input interface that is described in relation with figure 2. The output interface includes at least two power pins that allow sending data through an operating voltage modulation.

The phone I/O interfaces may include or be connected to means for interfacing with a user, such as a Man Machine Interface (or MMI).

The phone 12 may include a keyboard 122, a display screen 124, a loudspeaker(s) (not represented), a microphone(s) (not represented), a camera(s) (not represented) and/or (an)other interface(s), as an internal MMI.

The phone 12 MMI allows a user(s) to interact with the phone 12.

The phone 12 MMI may be used for presenting information to its user, like e.g., a message(s) for prompting the user to enter or provide user authentication data, such as "Please enter your password", "Please enter your PIN" and/or "Please enter your biometric data".

The phone 12 MMI may be used for getting data entered or provided by the concerned user, such as user authentication data, like e.g., a password, a Personal Identification Number (or PIN) and/or user biometric data (like e.g., a fingerprint(s), a facial print(s), a voice print(s) and/or an iris print(s)).

The phone 12 MMI may be used for inputting data to be stored in or through the phone 12, and/or for outputting data, such as data read from the phone 12, that may be securely stored in either the phone 12 or an entity(ies) cooperating with the phone 12, such as an SE chip, like e.g., the eUICC 14.

The phone I/O interfaces may include or be connected to are connected to an antenna 126. The antenna 126 allows exchanging data, through a Long Range (or LR) RadioFrequency (or RF) link(s), as a wireless link(s), via a communication network(s) (not represented), with an external interlocutor(s), such as (an)other phone(s) or a remote server(s) (not represented).

The LR RF may be fixed at several hundreds of MHz, e.g., around 850, 900, 1800, 1900 and/or 2100 MHz, as an LR type RF(s).

The communication network(s) may include a mobile radio-communication network(s), like e.g., a Global System for Mobile Communications (or GSM), a General Packet Radio Service (or GPRS), a Universal Mobile Telecommunications System (or UMTS), an EDGE (acronym for "Enhanced Data rates for GSM Evolution"), a Code Division Multiple Access (or CDMA) and/or a Long Term Evolution (or LTE) type network(s). Such a mobile radio-communication network set is not exhaustive but only for exemplifying purposes.

Additionally or alternately, the communication network(s) may include a WLAN (acronym for "Wireless Local Area Network"), an Internet and/or an Intranet type network(s). Such a communication network(s) may be accessed, from the phone 12, through a Short Range (or SR) radio-communication link(s), like e.g., a Bluetooth (or BTH), a Bluetooth Low Energy (or BLE), a Wi-Fi, a ZigBee, a Near Field Communication (or NFC) type link(s), as a ContacT-Less (or CTL) link(s).

The phone I/O interfaces may include or be connected to e.g., an I2C, an SPI, a USB, a UART and/or an ISO 7816-3 T=0/T=1 type interface(s).

The phone memory(ies) include one or several Non-Volatile Memories (or NVM) and/or one or several Volatile Memories (or VM).

The phone memory(ies) may include one or several EEPROMs (acronym for "Electrically Erasable Programmable Read-Only Memory"), one or several ROMs (acronym for "Read Only Memory"), one or several Flash memories, as an NVM(s), and/or any other memories of different types, like e.g., one or several RAMs (acronym for "Random Access Memory"), as a VM(s).

The phone memory(ies) 124 stores an OS and an inVention application (or Vapp) for securely accessing one or several eUICC features.

The Vapp may be compatible with any OS, such as, among others, an Android, an Iphone or a Windows type OS.

The Vapp is preferably able to use an operating voltage modulation scheme to send, to the eUICC 14, a cryptogram that is to be provided by the phone 12 to the eUICC 14 to access one or several chip features.

The Vapp includes one or several first cryptographic functions, as security functions.

The security functions include preferably a data encryption.

The data encryption is to be used prior to sending data, such as at least a predefined pattern, to the eUICC 14, as a phone interlocutor or addressee, so as to protect access to the data to be sent. To encrypt the data to be sent, the phone 12 uses an encryption key ke and an encryption algorithm, such as an Advanced Encryption Standard (or AES), a Data Encryption Standard (or DES), a Rivest-Shamir-Adleman (or RSA) or the like, that the phone 12 (or an entity, like e.g., a server or a chip that is preferably distinct from the eUICC 14, that cooperates with the phone 12) stores. The ke constitutes preferably a symmetric key that is shared between the phone 12 and the eUICC 14 while choosing a symmetric encryption algorithm, such as AES or DES. The shared key may be derived from data that is shared between the phone 12 and the eUICC 14. Alternately, the ke is a public key relating to the eUICC 14 that is shared between the phone 12 and the eUICC 14 while choosing an asymmetric encryption algorithm, such as RSA.

The security functions include preferentially a data signature.

The data signature is to be used prior to sending data, like e.g., at least a predefined pattern, to the phone interlocutor, so as to prove an origin of data originating from the phone 12. To sign data, the phone 12 uses a predetermined signature algorithm, such as an AES, a DES, an RSA, a Cipher-based Message Authentication Code (or CMAC), an Elliptic Curve Digital Signature Algorithm (or ECDSA) or the like, and a predetermined signature key that are both stored within the phone 12 or an entity, like e.g., a chip that may be distinct from the eUICC 14 or a server, that cooperates with the phone 12. The signature key ks is preferably a private key kp relating to the phone 12 while choosing an asymmetric signature algorithm, such as RSA or ECDSA. The phone 12 stores preferably a corresponding public key kpub that is shared with the eUICC 14, as the phone interlocutor. Alternately, the ks constitutes a symmetric key that is shared between the phone 12 and the eUICC 14 while choosing a symmetric signature algorithm, such as AES, DES or CMAC.

The data signature allows generating corresponding signed data, prior to its secure sending (i.e. in an authenticated manner while proving its integrity) to the eUICC 14, as the phone interlocutor.

The phone memory(ies) stores preferably an International Mobile Equipment Identity (or IMEI), a Mobile Subscriber Integrated Services Digital Network number (or MSISDN), an Internet Protocol (or IP) address, a Media Access Control (or MAC) address, an email address(es), as an IDentifier(s) relating to the phone 12, an International Mobile Subscriber Identity (or IMSI), an Integrated Circuit Card IDentifier (or ICCID) and/or the like, as a unique ID(s) relating to the eUICC 14.

The phone memory(ies) stores, preferably in a secure manner, a predetermined pattern. The pattern may have been provided by an entity, such as a chip distinct from the eUICC 14 or a server, that cooperates with the phone 12. The pattern that is to be recognized by the eUICC 14 is used for accessing securely one or several features of the eUICC 14.

The phone memory(ies) stores, preferably in a secure manner, a predetermined counter. The counter may have been provided by an entity, such as a server or a chip that cooperates with the phone 12, like e.g., the eUICC 14. The counter is used for diversifying the pattern from a session to another session for securely accessing an eUICC feature(s). The counter is used for preventing replaying the same pattern or the same corresponding cryptogram at another session for securely accessing one or several features of the eUICC 14. The counter value is shared between the phone 12 and the eUICC 14.

The phone memory(ies) stores, preferably in a secure manner, a predetermined unique ID relating to the eUICC 14, such as a Chip Serial Number or CSN, and/or a predefined unique ID relating to the eUICC product (or batch), as a fleet of chips that includes the concerned chip. The eUICC 14 is used for protecting the concerned solution against a cloning attack.

The phone 12 may have been provided by an entity, such as a server or the eUICC 14, that cooperates with the phone 12, with an ID relating to the eUICC 14 and/or an ID relating to the eUICC product that is associated with the phone 12.

The server may access a database that registers, for each ID relating to a (chip host) device, an ID relating to a chip product and/or an ID relating to a chip which the identified device is associated with. The server may have provided, once the phone 12 and/or the phone user has(have) preferably authenticated successfully, a registered phone with an ID relating to a chip product and/or an ID relating to the chip which the phone 12 is associated with.

The phone 12 is arranged to apply one or several first predetermined cryptographic operations, such as a data encryption and/or a data signature, to a data sequence.

The phone 12 thus obtains a corresponding cryptogram, namely a data sequence that is encrypted and/or signed, as a secure data sequence.

The phone 12 is further able to send, to the eUICC 14, the cryptogram.

The phone 12 may be configured to send, to the eUICC 14, a predetermined trigger signal.

The phone 12, as a chip host device, is connected to the eUICC 14, as the chip.

The chip 14 is incorporated, possibly in a removable manner, within a Printed Circuit Board (or PCB) of the host device 12.

The chip 14 may also include at least part of the phone component(s), like e.g., a baseband processor, an application processor(s) and/or other electronic component(s).

In a particular alternative embodiment, the (SE) chip includes a TEE, as a secure area of a chip host device processor and a secured runtime environment.

Alternately, i.e. instead of being embedded, the SE chip may be removable from the host phone 12, as the chip host device.

The chip 14 includes a (micro)processor(s) and/or a (micro)controller(s) 142, as data processing means, a memory(ies) 144, as data storing means, and one or several I/O interfaces 146 that are internally all connected, through an internal control and data bus 143, to each other.

The chip I/O interface(s) 146 includes at least one input interface that is described in relation with figure 2. The input interface includes at least two power pins that allow receiving data through an operating voltage modulation.

The chip I/O interface(s) 146 allow(s) communicating data at least from the chip 14 exterior to the internal chip 14 components and preferably vice versa, namely from the internal chip 14 components to the chip 14 exterior.

The chip I/O interface(s) 146 may include or be connected to e.g., an I2C, an SPI, a USB, a UART and/or an ISO 7816-3 T=0/T=1 type interface(s).

The chip data processing means includes a (main) Central Processing Unit (or CPU).

The CPU 122 processes, controls and communicates internally data with all the other components incorporated within the chip 14 and, through the I/O interface(s) 146, with the chip exterior.

The CPU 122 executes or runs one or several applications, like e.g., a SIM type application that allows to identify and authenticate to a network(s).

The CPU 122 executes, in a preferred manner, one or several security functions, like e.g., a chip user authentication function through a PIN, biometric data and/or the like, as user reference data, that is stored, preferably in a secure manner, within the chip memory(ies) 144.

The chip memory(ies) 144 includes preferably one or several NVMs and one or several VMs.

The chip memory(ies) 144 stores, preferably in a ROM type memory(ies), an OS and an inVention application (or Vappli) for securely accessing one or several chip features. The concerned chip features may include an access to a memory(ies), a loading of a new OS source code, a writing of user data and/or system data in a secure way.

The Vappli includes one or several second cryptographic functions, as security functions.

The security functions include preferentially a data signature verification.

The data signature verification is to be used after having received data, like e.g., at least a cryptogram, from the chip interlocutor, so as to prove an origin of data received by the chip 14. To verify a received (digital) signature, as signed data, the chip 14 uses a predetermined signature verification algorithm, such as an AES, a DES, an RSA, an ECDSA, a CMAC or the like, and a predetermined signature verification key kv that are both stored within the chip 14. The kv, is preferably a public key kpub relating to the device 12, as the data sender, and that is shared between the phone 12 and the eUICC 14 while choosing an asymmetric signature verification algorithm, such as RSA or ECDSA.

Alternately, the kv constitutes a symmetric key that is shared between the phone 12 and the eUICC 14 while choosing a symmetric signature algorithm, such as AES, DES or CMAC.

The data signature allows the eUICC 14, as its receiver, to authenticate the phone 12, as its sender and to prove the integrity of the signed data (i.e. the received signed data has not been modified). The chip 14 stores preferably the kpub relating to the device, as the chip interlocutor.

The security functions include preferably a data decryption.

The data decryption is to be used after having received data, such as at least a cryptogram, as encrypted data, from the chip interlocutor, so as to protect access to the received data that is encrypted. To decrypt the received encrypted data, the chip 14 uses a decryption key kd and a decryption algorithm, such as an AES, a DES, an RSA or the like, that the chip 14 stores. The kd used for the data decryption is preferably the ke used for the data encryption. The kd thus constitutes preferably the symmetric key that is shared between the device 12, as a chip interlocutor, and the chip 14 while choosing a symmetric decryption algorithm, such as AES or DES. The shared key may be derived from data that is shared between the device 12 and the chip 14. Thus, the chip 14 is, apart from the device 12, the sole entity that is able to decrypt the received encrypted data if the chip interlocutor has effectively the concerned shared data and thus the corresponding shared key. Alternately, the kd is a private key relating to the eUICC 14 while choosing an asymmetric decryption algorithm, such as RSA.

The data decryption allows accessing corresponding decrypted encrypted data, i.e. data in plain text, after its secure reception (i.e. in an encrypted manner) from the chip interlocutor, as the encrypted data originator.

The chip memory(ies) stores preferably an IMSI, an ICCID, a CSN and/or the like, as a unique ID(s) relating to the chip 14 and a chip 14 ID.

The chip memory(ies) may store a unique ID relating to the product (or batch) of the chips, as a chip 14 product ID that includes the chip 14.

The chip memory(ies) stores, preferably in a secure manner, a predetermined pattern. The pattern may have been provided by an entity, such as a chip distinct from the eUICC 14 or a server, that cooperates with the chip 14. The pattern that is to be recognized by the chip 14 is used for authorizing access to one or several features of the chip 14.

The chip memory(ies) may store a plurality of patterns corresponding, each, to a feature(s) of the chip 14 to be accessed, when applicable.

The chip memory(ies) stores, preferably in a secure manner, a predetermined counter. The counter may have been provided by an entity, such as a server, that cooperates with the chip 14. The counter value has to be maintained in a synchronized manner between the device 12 and the chip 14. Once a current counter value has been recognized by the chip 14 during a secure chip feature access session, the chip is preferably arranged to change the counter value for the next secure chip feature access session. To change the counter value, the chip 14 is able to increment or decrement the current counter value by a predetermined increment or decrement value respectively, so as to get a next counter value that is valid for the next secure chip feature access session.

According to a particular embodiment, if a chip input interface that is described infra in relation with the figure 2 and that includes two pads (or pins), receives, through a signal that is modulated on an operating voltage, data, the chip 14 stores the received data in a (chip) VM. The VM is used notably for storing data that is thus received by the chip 14. The VM has a predetermined fixed size, such as a size that is expressed in a number of byte(s), that corresponds to a power of two (i.e. a number of the form 2ⁿ where n is an exponent integer). The length of the data to be received is adjusted to the VM size.

According to an essential invention feature, the chip (and, more exactly, its CPU) is adapted to verify, among data received by or within the chip 14, whether a predetermined trigger signal is or is not present.

The trigger signal may originate from either, as an internal trigger signal, a chip memory, as an internal chip component, or, as an external trigger signal, through an operating voltage modulation scheme, the device, as an external entity.

According to one particular embodiment, the chip CPU receives a predefined interrupt signal, as an internal trigger signal, from a chip VM that has received, through an operating voltage modulation scheme, data from the chip exterior, when the chip VM becomes full (or complete) (i.e. the VM stores as much data that the VM size), as described in relation with the figure 2.

According to another embodiment that is presented in relation with the figure 3, the chip 14 (CPU) is configured to receive, through an operating voltage modulation scheme, an external trigger signal.

The trigger signal (be it internal or external) allows notifying the chip 14 to launch an application of one or several second predetermined cryptographic operations to a cryptogram received through an operating voltage modulation scheme.

The chip 14 is adapted to apply, only if the trigger signal is present, one or several second cryptographic operations, such as a data signature verification and/or a data decryption, to the received cryptogram and thus obtain the received data sequence (in plain text).

The chip 14 is arranged to verify whether the received data sequence does or does not include a predetermined pattern.

The chip 14 is configured to authorize, only if the received data sequence includes the pattern, access to the feature(s) of the chip 14.

**Figure 2** shows schematically an exemplary embodiment of an architecture of the chip 14.

In this example, the chip 14 includes an (electrical) communication interface 20, a CPU 220, as data processing means, and data storing means 230 that includes a VM 232 and a NVM 234.

As known per se, contents of a VM are erased when the power is turned off or interrupted. Contents of an NVM are persistent and survive even after that the power is turned off or interrupted (once or several times).

The communication interface 20 includes six pads or pins: a GrouND (or GND) pin 22, as a first reference voltage power input, a VCC pin 24, as a second reference voltage power input, an I/O pin 26, as Input/Output for serial data, a CLocK (or CLK) pin 28, as a clock signal input, a ReSeT (or RST) pin 210, an a Vpp pin 212, as a programming power input.

The chip 14 comprises, preferably in a ROM, an agent.

The agent is preferably a SW component, as the Vappli.

Alternately, the agent is a HW component or a combination of HW and SW components.

The agent is preferably able to measure a series of voltage values between the GND pin 22 and the VCC pin 24, as two power supply inputs.

The agent is also able to detect a series of sync signals which are interleaved with the voltage values. The sync signals are distinct from a CLK signal(s) which may be received on the CLK pin 28.

The chip 14 receives preferably data through the received series of voltage values between the GND pin 22 and the VCC pin 24, as two power supply inputs.

According to an embodiment of the invention, the VM(s) is(are) adapted to store data that is received by the chip 14. According to such an embodiment, the VM(s) is(are) configured to send, to the CPU 220, when the VM(s) is(are) full, a predefined interrupt signal, as an internal trigger signal. The VM(s) store(s), when the VM(s) is(are) full, at least the received cryptogram.

According to another embodiment of the invention, the agent (or the chip 14) is configured to verify, among data that is received by the chip 14, whether a predetermined trigger signal is or is not present. According to such an embodiment, as it is described in relation with figure 3, the trigger signal, as an external trigger signal, includes a predefined voltage between the two power supply inputs for a predetermined number of one or several CPU clock cycles.

The trigger signal, when the presence is detected by the CPU 220, allows to trigger an execution, by the CPU 220, of one or several second cryptographic functions onto the received data.

**Figure 3** presents schematically a cryptogram and a trigger signal that the device 12 sends to the chip 14 by using an operating voltage modulation scheme.

According to such a presented embodiment, the agent spies only the two power supply pins 22 and 24.

The agent is configured to detect different classes of operating conditions, namely class A, class B and class C, that are defined by, for instance, the International Organization for Standardization (or ISO)/IEC 7816-3 third edition dated 2006-11-01.

More precisely, the nominal supply voltage provided to the VCC pin 24 is:
- 5 V for class A;
- 3 V for class B;
- 1,8 V for class C.

The chip 14 receives a signal 31.

In the given example of figure 3, a signal of class B that is detected on the VCC pin is interpreted by the agent, as a sync signal.

Alternately, the sync signal is implemented by a predefined difference between the two power supply inputs.

The chip 14 is adapted to detect, within a received series of measured voltage values between the two power supply inputs, a predefined trigger signal 35. In other words, the chip 14 is configured to verify, among data received by the chip 14, whether a predefined trigger signal 35 is or is not present.

The trigger signal 35 shall arrive at the end of the received secure data sequence to notify a chip security layer to start one or several second cryptographic operations, namely a data signature verification and/or a data decryption, on the secure data sequence.

The length of the secure data sequence may vary depending on the chip 14 feature(s) that is(are) to be accessed. The length of the secure data sequence is preferably large when the chip feature(s) that is(are) to be accessed is(are) sensitive in terms of security.

In the given example of figure 3, a signal 34 that is detected on the VCC pin is interpreted by the agent, as a trigger signal 35.

The trigger signal 35, as an external trigger signal, includes e.g., a predefined voltage, such as 4V, as a voltage between the class A voltage and the class B voltage, between the two power supply inputs, for a predetermined number of one or several CPU clock cycles, such as between e.g., one and 16 clock cycles. The number of the CPU clock cycles may be adapted to a used CPU architecture.

The occurrence of the trigger signal 35 allows the chip 14 to know that the chip 14 has effectively received, through an operating voltage modulation scheme, a secure data sequence, as a cryptogram.

The secure data sequence includes encrypted and/or signed data relating to the pattern.

The secure data sequence is constituted by the following sequence or series of bits or bytes "0" 36, "0" 38, "1" 310 and "0" 312.

The chip 14 stores the received secure data sequence in its VM(s), such as one or several flip-flops.

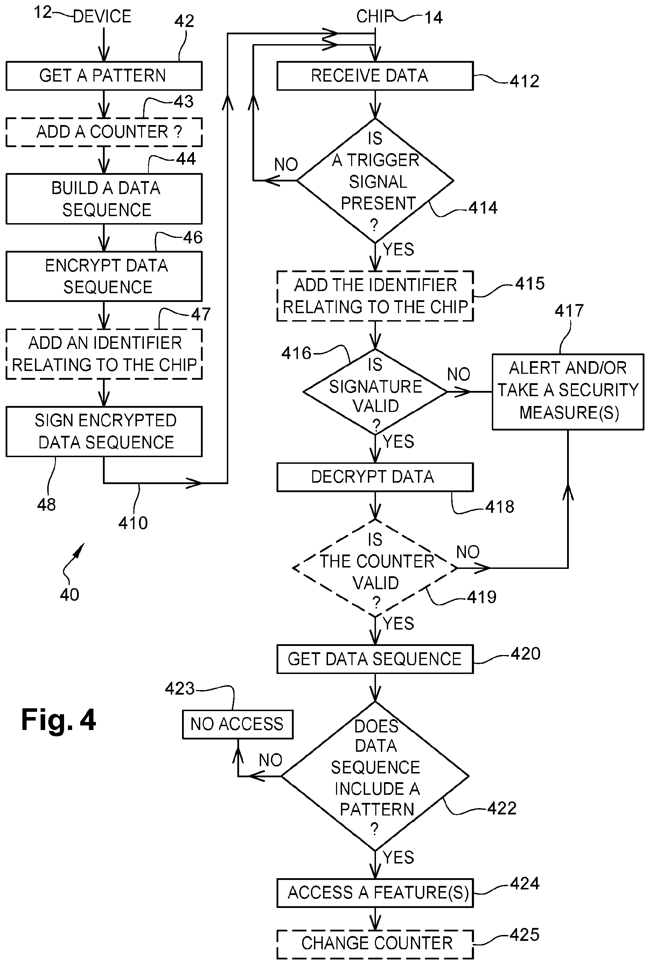

**Figure 4** depicts an exemplary embodiment of a message flow 40 that involves the device 12 and the chip 14, so that the chip 14 securely detects a predefined pattern and, when detected, authorizes access to a chip 14 feature(s).

In the described scenario, the device 12 and the chip 14 are in the field, i.e. at a post-issuance stage.

Firstly, the device 12 retrieves 42, from a device memory, a predefined pattern. To retrieve the pattern, the device 12 reads preferably a device NVM that stores the pattern. The pattern has preferably a variable size. The pattern size may vary between e.g., 16 bytes and e.g., 256 bytes. The pattern size depends preferably on the chip feature(s) to be accessed. The pattern (in plain text) can be encoded using a Length Value (or LV) format, as described in ETSI TS 101 220 (7.1.2 Length encoding) e.g., v.7.0.0 dated 2004-12.

The device 12 gets preferably a counter. To get the counter, the device 12 reads preferably the counter from a device NVM that stores the counter. The counter has a fixed size. The counter size may be of e.g., 4 bytes.

The device 12 adds 43 preferably (but not mandatorily) the counter to the retrieved pattern by concatenating the counter either before or after the pattern. The device 12 creates a corresponding data sequence. The data sequence relates to the pattern.

Then, the device 12 builds 44 a data sequence by concatenating the pattern, possibly the counter and possibly padding bits, so as get a data sequence that has a fixed size. The built data sequence relates to the pattern. The data sequence size may be a multiple of 8 bytes or 16 bytes depending on the block size of the used encryption algorithm and/or the used signature algorithm.

The device 12 encrypts 46 preferably the data sequence (preferably with the counter). In other words, the device 12 applies preferably a data encryption to the data sequence (preferably with the counter). The device 12 obtains thus a first cryptogram, as an encrypted data sequence (preferably with the counter). The first cryptogram relates to the pattern.

The device 12 retrieves preferably a unique ID relating to the chip 14.

To retrieve the chip ID, the device 12 reads preferably the chip ID from a device NVM that stores the chip ID.

Instead of retrieving internally the chip ID, when not available at the device, the device 12 requests, to the chip 14, through another thus open communication link, such as the ISO 7816-3 communication protocol using Application Protocol Data Unit (or APDU) than the operating voltage modulation link, a chip ID 12. The chip ID request includes or is accompanied preferably with an authentication token or the like. After having preferably authenticated the device 12 by using the provided authentication token or the like, the chip 14 sends, to the device 12, through the open communication link, the chip 14 ID, as a request response.

Alternatively, instead of a chip ID, the device 12 retrieves preferably a unique ID relating to the chip 14 product. To retrieve the chip product ID, the device 12 reads preferably the chip product ID from a device NVM that stores the chip product ID. According to such an embodiment, the device 12 does not need to any other communication link than the one used to send the secure data sequence, namely the operating voltage modulation scheme.

The device 12 may add 47 the retrieved chip ID either to the first cryptogram (when the data sequence (preferably with the counter) is previously encrypted) or the data sequence (when the data sequence (preferably with the counter) is not previously encrypted) that the device 12 has to send securely to the chip 14.

Alternatively, instead of a chip ID, the device 12 adds the retrieved chip product ID either to the first cryptogram (when the data sequence (preferably with the counter) is previously encrypted) or the data sequence (when the data sequence (preferably with the counter) is not previously encrypted) that the device 12 has to send securely to the chip 14.

The device 12 signs 48 preferably the chip ID (or the chip product ID) and either the first cryptogram (when the data sequence (preferably with the counter) is previously encrypted) or the data sequence (when the data sequence (preferably with the counter) is not previously encrypted). In other words, the device 12 applies preferably to either the first cryptogram or the data sequence, a data signature.

The device 12 obtains preferably signed encrypted data sequence (and preferably chip ID or chip product ID), as a second cryptogram (when the data sequence (preferably with the counter) is previously encrypted), or signed data sequence (and preferably chip ID or chip product ID), as a third cryptogram (when the data sequence (preferably with the counter) is not previously encrypted). The data signature has a fixed size. The data signature size may be of e.g., 8 bytes.

Then, once the data sequence (preferably with the counter) has been encrypted and/or signed (preferably with either the chip ID or the chip product ID), the device 12 sends 410, to the chip 14, the resulting secure data sequence, as a cryptogram. The resulting cryptogram has preferably a fixed size. The cryptogram size may be adjusted to a chip VM that may store the received cryptogram.

The device 12 may also send, to the chip 14, a predetermined trigger signal, as an external trigger signal.

According to an interesting invention feature, the device sends, to the chip, the cryptogram and possibly the trigger signal, by using an operating voltage modulation scheme, as a universal communication link. The universal communication link is common to all of the chips. Thus, the device 12 does not need to use any other specific communication channel that may not be available at the chip 14 side.

Then, the chip 14 receives 412 data, as a data sequence that is encrypted and/or signed and as a cryptogram relating to the pattern.

According to an interesting invention feature, the chip receives, from the device, the cryptogram and possibly the trigger signal, by using an operating voltage modulation scheme, as a universal communication link.

The chip 14 verifies 414, among data received by or in the chip 14, whether a predetermined trigger signal is or is not present.

According to a first embodiment, to carry out such a trigger signal presence verification or a trigger signal detection, the chip 14 CPU detects, as an external trigger signal, within a received series of measured voltage values between the two power supply inputs, a predefined voltage between the two power supply inputs for a predefined number of one or several CPU clock cycles.

According to a second embodiment, to carry out such a trigger signal presence verification or a trigger signal detection, the chip 14 CPU receives, from a chip VM, an interrupt signal, as an internal trigger signal, when the chip VM is full. The chip VM stores, when the chip VM is full, at least the received cryptogram. The chip VM size may be configured to adjust to the size of the received cryptogram.

As long as the chip 14 CPU has not detected the trigger signal presence, the chip 14 CPU continues receiving data by going back to the data reception step 412. The chip 14 CPU may perform simultaneously an(other) usual task(s) avoiding thus to degrade the performance.

As soon as the chip 14 CPU has detected the trigger signal presence, the chip 14 is aware that a cryptogram relating to the pattern has been received by the chip 14 through an operating voltage modulation scheme.

Then, the chip 14 retrieves, from the chip VM, the received cryptogram.

The chip 14 applies, only if the trigger signal is present, one or several second cryptographic operations, to the (retrieved) received cryptogram.

To do this, the chip 14 retrieves preferably a chip 14 ID.

To retrieve the chip ID, the chip 14 reads preferably the chip ID, from a chip 14 ROM, as an NVM, that stores the chip ID.

Alternatively, instead of the chip ID, the chip 14 retrieves preferably a unique ID relating to the chip 14 product. To retrieve the chip product ID, the chip 14 reads preferably the chip product ID from a chip 14 NVM that stores the chip product ID.

The chip 14 may add 415 the retrieved chip ID to the received cryptogram.

Alternatively, instead of the chip ID, the device 12 adds the retrieved chip product ID to the received cryptogram.

The chip 14 verifies 416 preferably whether the signature is or is not valid.

If the signature is not valid, then the chip 14 infers that the chip 14 is being attacked and sends 417, to a predetermined entity, such as a remote server, an alert signal for informing that the chip 14 is being attacked and/or takes a security measure(s), such as a chip initialisation or reset, so as to erase all of the data stored in the chip.

Otherwise, i.e. only if the signature is valid, the chip 14 has authenticated the device 12, as being the chip 14 interlocutor, and continues to carry out the next scheduled step(s) relating to the invention method (for securely accessing a chip feature(s)).

To continue the next scheduled steps, the chip 14 decrypts 418 preferably the received cryptogram. Thus, the chip 14 decrypts the encrypted data sequence and gets the corresponding data sequence possibly with the counter.

The chip 14 verifies (not represented) whether the obtained data sequence does or does not include the counter.

In the negative, i.e. if the data sequence does not include the counter, the chip 14 infers that the chip 14 is being attacked and sends 417, to a predetermined entity, such as a remote server, an alert signal for informing that the chip 14 is being attacked and/or takes a security measure(s), such as a chip initialisation or reset, so as to erase all of the data stored in the chip.

In the affirmative, i.e. only if the data sequence includes the counter, the chip 14 verifies 419 whether the counter is or is not valid.

If the counter is not valid, then the chip 14 infers that the chip 14 is being attacked and sends 417, to a predetermined entity, such as a remote server, an alert signal for informing that the chip 14 is being attacked and/or takes a security measure(s), such as a chip initialisation or reset, so as to erase all of the data stored in the chip.

Otherwise, i.e. only if the counter is valid, the chip 14 retrieves or obtains 420 the received data sequence in plain text, i.e. in an unencrypted manner.

Then, the chip 14 verifies 422 whether the received data sequence does or does not include a predetermined pattern that is registered in a chip NVM or the like.

In the negative, i.e. if the received data sequence does not include the pattern, the chip 14 forbids or refuses 423 the device 12 to access a chip feature(s).

In the affirmative, i.e. only if the received data sequence includes the pattern, the chip 14 authorizes 424 the device 12 to access a corresponding chip feature(s).

The chip 14 changes 425 preferably the counter value for a next chip feature access session.

The chip 14 may send, to the device 12, through another communication link, such as ISO 7816-3 using APDU, an I2C, an SPI or a USB, than the communication link used to receive the cryptogram relating to the pattern, a message informing the device 12 that the counter value has been changed.

The device 12 that shares with the chip 14 one and the same algorithm for determining a next counter value changes also the counter value, so as to be synchronized with the new counter value. In other words, once the chip 14 and the device 12 have changed the counter value, the device 12 and the chip 14 shares the new counter value that is valid for a next chip feature access session.

The invention solution allows securing access to a chip feature(s).

The invention solution allows having a secure, seamless and efficient access to a chip features.

The invention solution allows avoiding to use a conventional communication protocol that may not be available to access the chip feature(s).

The invention solution allows avoiding to unsolder the chip from the device while using such a secure access to a chip feature(s), so as to analyse/diagnose and possibly debug and recover the chip in the field.

The embodiment that has just been described is not intended to limit the scope of the concerned invention. Other embodiments may be given. As another embodiment example (not represented), instead of receiving a pattern to be recognized from a local device, a remote server sends, in a wireless manner, through a chip host device, with the chip. Thus, there is no need to have a local physical access to a non-faulty or faulty chip, so as to access one or several chip features.

## Claims

1. A method (40) for securely accessing at least one feature of a chip (14), comprising:
- a) applying, by a device (12), at least one first predetermined cryptographic operation (46 or 48), to a data sequence, the device thus obtaining a cryptogram;
- b) sending (410), by the device to the chip, the cryptogram;
- c) verifying (414), by the chip, among data received by or within the chip, whether a predetermined trigger signal is or is not present, the trigger signal allowing to notify the chip to launch an application of at least one second predetermined cryptographic operation to the received cryptogram;
- d) applying, by the chip, only if the trigger signal is present, the at least one second cryptographic operation (416 or 418), to the received cryptogram;
- e) obtaining, by the chip, the received data sequence;
- f) verifying (422), by the chip, whether the received data sequence does or does not include a predetermined pattern; and
- g) authorizing (424), by the chip, access to the at least one feature of the chip, only if the received data sequence includes the pattern.

2. Method according to claim 1, wherein, the chip including at least one central processing unit or CPU (220), as data processing means, and at least one input interface (20), the at least input interface including at least two power supply inputs, to carry out the step c), the CPU detects, as an external trigger signal, within a received series of measured voltage values between the two power supply inputs, a predefined voltage (34) between the two power supply inputs for a predefined number of at least one CPU clock cycle.

3. Method according to claim 1, wherein, the chip including at least one central processing unit or CPU, as data processing means, and at least one volatile memory (232), as data storing means, the data received in the chip being stored in the at least one volatile memory, to carry out the step c), the CPU receives, from the at least one volatile memory, when the at least one volatile memory is full, a predefined interrupt signal, as an internal trigger signal, the at least one volatile memory storing, when the at least one volatile memory is full, at least the received cryptogram.

4. Method according to any previous claim, wherein the method further comprises the following steps: prior to a data encrypting applied to the data sequence to be sent, the device adds (43) a counter before or after the pattern to create a corresponding data sequence.

5. Method according to claim 1 or 4, wherein the method further comprises the following steps: prior to a data signing applied to either the data sequence or a first cryptogram that results from a data encryption of the data sequence, the device adds (47) a unique identifier relating to the chip, and the device signs both the chip identifier and either the data sequence or the first cryptogram, and the device adds the resulting data signature to either the data sequence or the first cryptogram.

6. Method according to claim 5, wherein the method further comprises the following steps: the chip adds (415) the unique identifier relating to the chip to the received data, the chip verifies (416) whether the data signature is or is not valid, and the chip continues, only if the data signature is valid, to carry out the next steps comprised in the method.

7. Method according to claim 1 or 4, wherein the method further comprises the following steps: prior to a data signing (48) applied to either the data sequence or a first cryptogram that results from a data encryption of the data sequence, the device reads a unique identifier relating to the chip product, the chip product identifier being stored in at least one non-volatile memory in the device, and the device signs both the chip product identifier and the data sequence, and the device adds the resulting data signature to either the data sequence or the first cryptogram.

8. Method according to claim 7, wherein the chip reads the unique identifier relating to the chip product, the chip product identifier being stored in at least one non-volatile memory in the chip, the chip verifies whether the data signature is or is not valid, and the chip continues, only if the data signature is valid, to carry out the next steps comprised in the method.

9. Method according to claim 6 or 8, wherein the method further comprises the following steps: prior to a chip verification (422) of whether the received data sequence does or does not include a predetermined pattern, the chip verifies whether the received data sequence does or does not include a predefined counter, the chip verifies, only if the received data sequence includes the counter, whether the received data sequence does or does not include a predetermined pattern, and, only if the received data sequence includes the pattern, the chip changes a value relating to the counter.

10. A system (10) for securely accessing a feature of a chip (14), the system including a device (12) and the chip, the chip being connected to the device, the device is configured to:
- apply, at least one first predetermined cryptographic operation (46 or 48), to a data sequence, the device thus obtaining a cryptogram; and
- send (410), to the chip, the cryptogram;
and the chip is configured to:
- verify (414), among data received by or within the chip, whether a predetermined trigger signal is or is not present, the trigger signal allowing to notify the chip to launch an application of at least one second predetermined cryptographic operation to the received cryptogram;
- apply, only if the trigger signal is present, the at least one second cryptographic operation (416 or 418), to the received cryptogram;
- obtain the received data sequence;
- verify (422), whether the received data sequence does or does not include a predetermined pattern; and
- authorize (424) access to the at least one feature of the chip, only if the received data sequence includes the pattern.
